# FASCICULE DE BREVET EUROPEEN

(11) **EP 2 786 451 B1**
(45) Date de publication et mention de la délivrance du brevet: **15.11.2017**
(21) Numéro de dépôt: 12806577.8
(22) Date de dépôt: 27.11.2012
(51) Int. Cl.: H01R 13/703, B60L 11/18

(54) **CORDON DE CHARGE DE MODE 2 À MOYENS DE PROTECTION GALVANIQUE, POUR UN VÉHICULE**
MODUS-2-LADEKABEL MIT GALVANISCHER SCHUTZVORRICHTUNG FÜR EIN FAHRZEUG
MODE 2 CHARGING CABLE WITH GALVANIC PROTECTION MEANS FOR A VEHICLE

(30) Priorité: 01.12.2011 FR 1161006
(43) Date de publication de la demande: 08.10.2014
(73) Titulaire: PSA Automobiles SA, 78300 Poissy (FR)
(72) Inventeur: FAURE, Michel, F-25750 Desandans (FR)
(74) Mandataire: Jeannin, Laurent Jean-Pierre
(86) Numéro de dépôt international: PCT/FR2012/052727
(87) Numéro de publication internationale: WO 2013/079863

(56) Documents cités:
- WO-A1-2011/012451
- DE-A1-102008 042 677
- DE-A1-102010 053 074
- US-A1- 2011 169 447
- "IEC 61851-1:2010 - Electric vehicle conductive charging system - Part 1: General requirements", INTERNATIONAL STANDARD - IEC NORME INTERNATIONALE - CEI, X, XX, vol. ed2.0, no. IEC 61851-1:2010, 25 novembre 2010 (2010-11-25), pages 1-104, XP008147718,

## Description

L'invention concerne le chargement des batteries de véhicules électriques ou hybrides, éventuellement de type automobile, et plus précisément les cordons de charge dit de mode 2 qui permettent de tels chargements, notamment dans un cadre domestique.

Il est rappelé que les cordons de charge de mode 2 sont définis par la norme IEC61851-1 et qu'ils comprennent :
- une première prise (ou fiche domestique), destinée à être connectée à une prise de courant (ou prise secteur) qui est connectée à un réseau d'alimentation électrique (parfois appelé « secteur »), et comportant de préférence des premiers moyens d'action propres à placer un circuit électrique dans un premier état (par exemple fermé) en cas de coopération avec des seconds moyens d'action de la prise de courant,
- une seconde prise (ou prise de charge) destinée à être connectée à une prise de véhicule couplée à un chargeur de batterie,
- un câble électrique comportant au moins un fil de neutre et un fil de phase interconnectant les première et seconde prises, et
- un boîtier de contrôle (parfois appelé CCID (« Charging Circuit Interrupting Device ») ou ICCB (In-Cable Control Box »)) comportant des moyens de contrôle connectés au circuit électrique et agencés pour délivrer un signal à un premier fil de contrôle (ou fil pilote), connecté à la seconde prise, notamment lorsque le circuit électrique est dans son premier état. On notera que ce signal (généralement appelé signal pilote) est généré en permanence, et c'est sa modulation qui permet de signaler au chargeur de batterie du véhicule si le courant de charge qu'il peut consommer sur le réseau d'alimentation électrique est maximum.

On comprendra que si la prise de courant respecte un cahier des charges précis le boîtier de contrôle peut permettre au chargeur de batterie de réclamer un courant de charge plus élevé (par exemple égal à treize ampères (13 A) au lieu de huit ampères) via le cordon de charge, et donc un chargement plus optimal de la batterie, notamment en termes de vitesse et de sécurité.

Généralement les seconds moyens d'action de la prise de courant se présentent sous la forme d'un aimant destiné à agir sur les premiers moyens d'action d'un cordon de charge, qui se présentent sous la forme d'au moins un interrupteur à lame magnétique. En l'absence d'un aimant dans la prise de courant, l'interrupteur à lame magnétique (parfois appelé ILS (pour « Interrupteur à Lame Souple ») reste dans une position ouverte et donc le circuit électrique du cordon de charge demeure dans une position ouverte (second état), ce qui alerte le boîtier de contrôle de la situation. Le boîtier de contrôle peut alors à son tour avertir le chargeur de batterie pour qu'il ne requière pas un courant de charge maximal (ce qui aura pour conséquence d'augmenter le temps de charge et donc le temps d'immobilisation du véhicule, et éventuellement d'empêcher la réalisation de certaines prestations, comme par exemple le conditionnement thermique de l'habitacle et/ou de la boîte de vitesse et/ou de la batterie).

Deux agencements différents du circuit électrique du cordon de charge ont été proposés.

Un premier agencement comprend deux fils de contrôle ayant des premières extrémités, respectivement connectées aux deux bornes de l'interrupteur à lame magnétique, et des secondes extrémités, connectées au boîtier de contrôle. Ce premier agencement présente au moins deux inconvénients. Tout d'abord, il impose l'utilisation de deux sous-parties différentes du câble électrique, qui assure l'interconnexion entre les première et seconde prises du cordon de charge, ce qui s'avère onéreux. En effet, une première sous-partie, reliant la première prise au boîtier de contrôle, doit comporter les deux fils de contrôle du circuit électrique, alors qu'une seconde sous-partie, reliant le boîtier de contrôle à la seconde prise, ne comporte qu'un seul fil de contrôle pour la transmission du signal pilote. Ensuite, il pose des problèmes en cas de blessure de la première sous-partie du câble électrique. En effet, dans la situation précitée, l'un au moins des fils de contrôle peut se retrouver en contact avec le fil de phase ou le fil de neutre, ce qui peut s'avérer dangereux et notamment endommager le cordon de charge (en particulier son boîtier de contrôle), voire la prise de véhicule. Cela peut notamment entraîner une destruction du boîtier de contrôle et donc la destruction du cordon électrique par un feu électrique.

Un second agencement comprend, d'une première part, un fil de contrôle ayant une première extrémité connectée à l'une des deux bornes de l'interrupteur à lame magnétique et une seconde extrémité connectée au boîtier de contrôle, d'une deuxième part, une première liaison connectant le fil de terre à l'autre borne de l'interrupteur à lame magnétique, et, d'une troisième part, une seconde liaison connectant le fil de terre au boîtier de contrôle. Ce second agencement est certes moins onéreux que le premier du fait qu'il permet d'utiliser deux sous-parties de câble électrique du même type, mais il présente cependant au moins deux inconvénients. Tout d'abord, le courant qui circule dans le circuit électrique peut perturber certains moyens de protection différentielle du boîtier de contrôle, ce qui peut induire des effets de bord, comme par exemple un déclenchement intempestif de la protection ou un aveuglement de la protection. Ensuite, le fil de contrôle peut se retrouver en contact avec le fil de phase ou le fil de neutre, ce qui peut s'avérer dangereux. Cela peut notamment entraîner une destruction du boîtier de contrôle et donc la destruction du cordon électrique par un feu électrique.

L'invention a donc pour but d'améliorer la situation.

Elle propose notamment à cet effet un cordon de charge comprenant, d'une première part, une première prise destinée à être connectée à une prise de courant et comportant des premiers moyens d'action propres à placer un circuit électrique dans un premier état en cas de coopération avec des seconds moyens d'action de la prise de courant, d'une deuxième part, une seconde prise destinée à être connectée à une prise de véhicule (éventuellement de type automobile), d'une troisième part, un câble électrique comportant au moins un fil de neutre et un fil de phase interconnectant les première et seconde prises, et, d'une quatrième part, un boîtier de contrôle comportant des moyens de contrôle couplés au circuit électrique et agencés pour délivrer un signal à un premier fil de contrôle, connecté à la seconde prise, lorsque le circuit électrique est dans son premier état.

Ce cordon de charge se caractérise par le fait que son circuit électrique comprend :
- un second fil de contrôle couplé aux premiers moyens d'action,
- une première liaison connectant les premiers moyens d'action à l'un des fil de neutre et fil de phase,
- une seconde liaison connectée à l'autre des fil de neutre et fil de phase, et
- des moyens de protection galvanique connectés au second fil de contrôle et à la seconde liaison et agencés pour assurer une protection galvanique des moyens de contrôle vis-à-vis du fil de neutre, du fil de phase et du second fil de contrôle, et pour avertir les moyens de contrôle lorsque le circuit électrique est dans son premier état.

Grâce à cet agencement par protection (ou isolation) galvanique, les moyens de protection différentielle du boîtier de contrôle BC ne peuvent pas (ou quasiment pas) être perturbés. De plus, aucun courant ne peut circuler directement entre le fil de phase, le fil de neutre et le second fil de contrôle, vers les moyens de contrôle, ce qui permet de simplifier les moyens de protection de ces derniers tout en améliorant la sécurité de l'usager.

Le cordon de charge selon l'invention peut comporter d'autres caractéristiques qui peuvent être prises séparément ou en combinaison, et notamment :
- les moyens de protection galvanique peuvent comprendre un opto-coupleur propre, en cas de circulation d'un courant dans le circuit électrique, à générer un autre courant destiné à avertir les moyens de contrôle du placement du circuit électrique dans son premier état ;
- en variante, les moyens de protection galvanique peuvent comprendre un transformateur comportant des parties primaire et secondaire. Dans ce cas, la partie secondaire est propre à générer un courant qui est destiné à avertir les moyens de contrôle du placement du circuit électrique dans son premier état en cas de circulation dans la partie primaire d'un courant qui est issu du circuit électrique ;
- son circuit électrique peut également comprendre des moyens de protection auxiliaires implantés dans la première prise et/ou le boîtier de contrôle et agencés pour assurer une protection électrique au boîtier de contrôle en cas de survenue d'un problème électrique dans le circuit électrique ;
   ➢ les moyens de protection auxiliaires peuvent comprendre au moins un composant électrique choisi parmi (au moins) un composant résistif, un composant capacitif et un fusible ;
      - les moyens de protection auxiliaires peuvent comprendre un composant résistif et un composant capacitif montés en série sur le second fil de contrôle dans la première prise, et un composant résistif, un composant capacitif et un fusible montés en série sur le second fil de contrôle dans le boîtier de contrôle ;
- la première liaison peut interconnecter les premiers moyens d'action au fil de neutre dans la première prise, et la seconde liaison peut interconnecter le fil de phase aux moyens de protection galvanique dans le boîtier de contrôle ;
- en variante, la première liaison peut interconnecter les premiers moyens d'action au fil de phase dans la première prise, et la seconde liaison peut interconnecter le fil de neutre aux moyens de protection galvanique dans le boîtier de contrôle ;
- les premiers moyens d'action peuvent être agencés sous la forme d'un interrupteur qui comporte une lame magnétique propre à être déplacée en présence de seconds moyens d'action de type magnétique ;
- les moyens de protection galvanique peuvent faire partie des moyens de contrôle.

D'autres caractéristiques et avantages de l'invention apparaîtront à l'examen de la description détaillée ci-après, et des dessins annexés, sur lesquels :
- la figure 1 illustre schématiquement et fonctionnellement, dans une vue en coupe, un premier exemple de réalisation d'un cordon de charge selon l'invention, et
- la figure 2 illustre schématiquement et fonctionnellement, dans une vue en coupe, un second exemple de réalisation d'un cordon de charge selon l'invention,
- la figure 3 illustre schématiquement et fonctionnellement, dans une vue en coupe, une variante du premier exemple de réalisation d'un cordon de charge selon l'invention, et
- la figure 4 illustre schématiquement et fonctionnellement, dans une vue en coupe, une variante du second exemple de réalisation d'un cordon de charge selon l'invention.

Les dessins annexés pourront non seulement servir à compléter l'invention, mais aussi contribuer à sa définition, le cas échéant.

L'invention a notamment pour but de proposer un cordon de charge de mode 2 CC destiné à permettre le chargement de la batterie d'un véhicule électrique ou hybride, éventuellement de type automobile, au niveau d'une prise de courant (ou prise secteur) qui est connectée à un réseau d'alimentation électrique (parfois appelé secteur).

Dans ce qui suit, on considère, à titre d'exemple non limitatif, que le véhicule est de type automobile. Il s'agit par exemple d'une voiture de type électrique ou hybride. Mais l'invention n'est pas limitée à ce type de véhicule. Elle concerne en effet tout type de véhicule comportant au moins une batterie rechargeable pouvant être rechargée via une prise de courant (ou prise secteur).

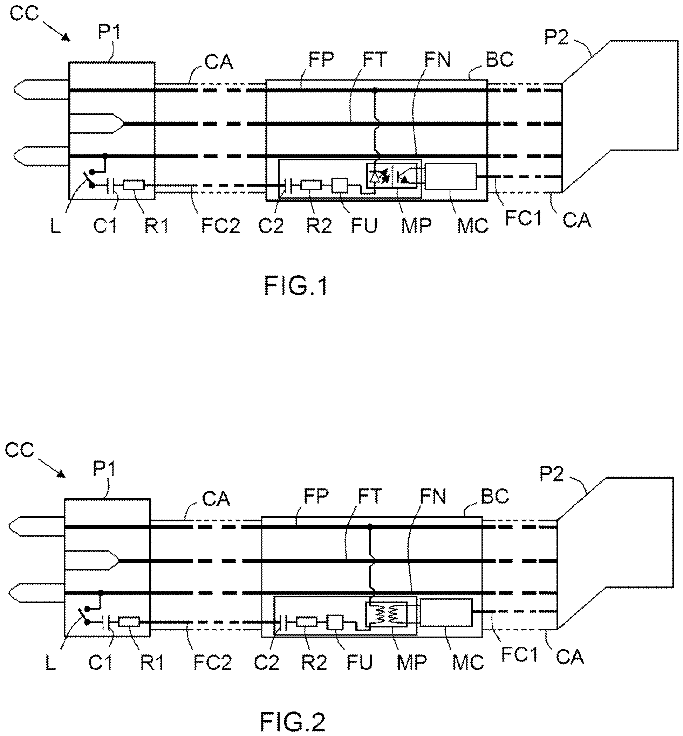

On a schématiquement représenté sur les figures 1 et 2 deux exemples de réalisation d'un cordon de charge CC selon l'invention.

Comme illustré, un cordon de charge CC, selon l'invention, comprend au moins une première prise P1, une seconde prise P2, un câble électrique CA, un boîtier de contrôle BC, et un circuit électrique.

La première prise P1 est destinée à être connectée à une prise de courant, comportant des seconds moyens d'action et par exemple fixée sur un mur (ou une cloison interne) d'un bâtiment qui est raccordé électriquement à un réseau d'alimentation électrique (ou secteur). Elle comporte des premiers moyens d'action L qui sont propres à placer le circuit électrique dans un premier état lorsqu'ils coopèrent avec les seconds moyens d'action de la prise de courant.

Dans ce qui suit, on considère, à titre d'exemple non limitatif, que le premier état est un état fermé qui autorise la circulation d'un courant. Mais il pourrait s'agir d'un état ouvert qui empêche la circulation d'un courant.

A titre d'exemple non limitatif, les premiers moyens d'action L peuvent, comme illustré, être agencés sous la forme d'au moins un interrupteur comportant une lame magnétique propre à être déplacée (ici en rotation) en présence de seconds moyens d'action de type magnétique dans la prise de courant à laquelle le cordon de charge CC doit être connecté. Mais l'invention n'est pas limitée à ces types de premiers et seconds moyens d'action. Elle concerne en effet tous types de premiers et seconds moyens d'action qui par interaction peuvent induire un changement d'état du circuit électrique du cordon de charge CC. On notera que dans l'exemple illustré l'interrupteur à lame magnétique L comprend deux bornes, dont une à laquelle sont couplés la lame magnétique et un (second) fil de contrôle FC2 sur lequel on reviendra plus loin.

La seconde prise P2 est destinée à être connectée à une prise de véhicule dédiée à la charge de la batterie. Elle est par exemple de type « pistolet ».

Le câble électrique CA comprend une gaine logeant au moins un fil de neutre FN et un fil de phase FP, ainsi que préférentiellement, comme illustré, un fil de terre FT, qui interconnectent les première P1 et seconde P2 prises.

Le boîtier de contrôle BC est du type de celui qui est défini par la norme IEC61851-1. Il comporte notamment des moyens de contrôle MC qui sont connectés au circuit électrique et qui sont agencés pour délivrer un signal à un (premier) fil de contrôle FC1, connecté à la seconde prise P2 et logé dans la gaine du cordon de charge CC, lorsque le circuit électrique est dans son premier état (ici l'état fermé).

On comprendra que chaque fois que les moyens de contrôle MC détectent que le circuit électrique est dans son premier état, ils modulent un signal pilote (ou consigne) qui est transmis au chargeur de batterie via le premier fil de contrôle FC1 et donc via le câble électrique CA et la seconde prise P2. Ce signal pilote modulé signale au chargeur de batterie du véhicule le courant de charge maximum qu'il peut consommer sur le réseau d'alimentation électrique. Si le véhicule est raccordé à une prise certifiée qui est adaptée à une charge sous un courant plus élevé, les moyens de contrôle MC délivrent un signal pilote modulé et pourront autoriser le chargeur de batterie à consommer un courant plus élevé, par exemple 13 A au lieu des 8 A qu'autoriserait une prise non certifiée. En revanche, si le véhicule est raccordé à une prise non certifiée, les moyens de contrôle MC délivrent le signal pilote non modulé et ne pourront autoriser le chargeur de batterie qu'à consommer un courant moins élevé, par exemple 8 A. Par conséquent, lorsque l'on dit ici que les moyens de contrôle MC délivrent un signal lorsque le circuit électrique est dans son premier état, cela signifie que ce signal délivré est le signal pilote modulé qui est destiné à signaler un raccordement à une prise certifiée.

Le circuit électrique comprend en complément de son second fil de contrôle FC2 (qui est couplé aux premiers moyens d'action L), des première et seconde liaisons et des moyens de protection galvanique MP.

La première liaison interconnecte la seconde borne des premiers moyens d'action L au fil de neutre FN ou bien au fil de phase FP.

La seconde liaison interconnecte le fil de phase FP ou bien le fil de neutre FN aux moyens de protection galvanique MP.

On notera que dans les exemples non limitatifs illustrés sur les figures 1 et 2, la première liaison interconnecte la seconde borne des premiers moyens d'action L au fil de neutre FN dans la première prise P1, et la seconde liaison interconnecte le fil de phase FP aux moyens de protection galvanique MP dans le boîtier de contrôle BC. Mais dans une variante de réalisation non représentée, la première liaison pourrait interconnecter la seconde borne des premiers moyens d'action L au fil de phase FP dans la première prise P1, et la seconde liaison pourrait interconnecter le fil de neutre FN aux moyens de protection galvanique MP dans le boîtier de contrôle BC.

Ce type d'interconnexion permet avantageusement de ne pas perturber les moyens de protection différentielle du boîtier de contrôle BC. Il permet également d'empêcher qu'un courant circule directement entre le fil de phase FP, le fil de neutre FN et le second fil de contrôle FC2, vers les moyens de contrôle MC, permettant ainsi de simplifier les moyens de protection de ces derniers (MC) tout en améliorant la sécurité de l'usager.

Les moyens de protection galvanique MP sont connectés au second fil de contrôle FC2 et à la seconde liaison et sont agencés non seulement pour assurer une protection (ou isolation) galvanique des moyens de contrôle MC vis-à-vis du fil de neutre FN, du fil de phase FP et du second fil de contrôle FC2, mais également pour avertir les moyens de contrôle MC lorsque le circuit électrique est dans son premier état (ici l'état fermé).

On entend ici par « protection galvanique » une protection qui assure une isolation électrique entre deux circuits électriques du fait de l'absence de circulation directe de courant de l'un de ces deux circuits électriques vers l'autre. On comprendra qu'ici l'un des deux circuits électriques est celui qui est couplé aux premiers moyens d'action L, alors que l'autre est constitué par les moyens de contrôle MC.

A titre d'exemple non limitatif, les moyens de protection galvanique MP peuvent, comme illustré sur la figure 1, être agencés sous la forme d'un opto-coupleur propre, en cas de circulation d'un courant dans le circuit électrique, à générer un autre courant qui est destiné à avertir les moyens de contrôle MC du placement du circuit électrique dans son premier état. Cet opto-coupleur peut, par exemple, comprendre une diode émettant des photons lorsqu'elle est alimentée en courant, et un photo-transistor qui devient passant (ou circulant) lorsqu'il reçoit des photons émis par la diode photoémettrice.

Mais comme illustré dans la variante de réalisation de la figure 2, les moyens de protection galvanique MP peuvent être agencés sous la forme d'un transformateur comportant des parties primaire et secondaire. Dans ce cas, la partie secondaire (ici un enroulement) est agencée de manière à générer un courant, qui est destiné à avertir les moyens de contrôle MC du placement du circuit électrique dans son premier état, en cas de circulation dans la partie primaire (ici un autre enroulement) d'un autre courant qui est issu du circuit électrique (lorsqu'il est dans son état fermé).

On notera que l'utilisation d'un opto-coupleur à diode photoémettrice permet à cette dernière de servir de fusible en cas de surtension dans le circuit électrique.

De préférence, et comme illustré non limitativement sur les figures 1 et 2, le circuit électrique peut également comprendre des moyens de protection auxiliaires R1, C1, R2, C2, FU implantés dans la première prise P1 et/ou dans le boîtier de contrôle BC. Ces moyens de protection auxiliaires R1, C1, R2, C2, FU sont agencés pour assurer une protection électrique au boîtier de contrôle BC en cas de survenue d'un problème électrique dans le circuit électrique, comme par exemple en cas de contact de la première liaison ou du second fil de contrôle FC2 avec le fil de phase LP (ou le fil de neutre FN dans la variante non représentée), ou bien de contact de la seconde liaison avec le fil de neutre FN (ou le fil de phase LP dans la variante non représentée), consécutivement à une blessure du câble électrique CA.

Ces moyens de protection auxiliaires R1, C1, R2, C2, FU peuvent comprendre au moins un composant électrique qui est choisi parmi au moins un composant résistif, un composant capacitif et un fusible. Chaque composant résistif R1, R2 est destiné à assurer une fonction de limitation de courant. Chaque composant capacitif C1, C2 est destiné à assurer une fonction d'impédance pour réduire le courant et accessoirement diminuer le risque de défaillance électrique, notamment en cas de court-circuit.

Par exemple, et comme illustré non limitativement sur les figures 1 et 2, les moyens de protection auxiliaires R1, C1, R2, C2, FU peuvent comprendre, d'une part, un composant résistif R1 et un composant capacitif C1 montés en série sur le second fil de contrôle FC2 dans la première prise P1, et, d'autre part, un composant résistif R2, un composant capacitif C2 et un fusible FU montés en série sur le second fil de contrôle FC2 dans le boîtier de contrôle BC.

Mais dans des variantes de réalisation, on pourrait ne prévoir, par exemple, qu'un composant résistif R1 monté en série sur le second fil de contrôle FC2 dans la première prise P1, et qu'un composant capacitif C2 monté en série (avec ou sans fusible FU) sur le second fil de contrôle FC2 dans le boîtier de contrôle BC, ou bien seulement un composant résistif R1 et un composant capacitif C1 montés en série sur le second fil de contrôle FC2 dans la première prise P1, ou encore seulement un composant résistif R2 et un composant capacitif C2, avec ou sans fusible FU, montés en série sur le second fil de contrôle FC2 dans le boîtier de contrôle BC.

Par ailleurs, d'autres composants de protection auxiliaire peuvent être envisagés, qu'ils soient de type passif ou actif, et par exemple des diodes.

On notera également, bien que cela ne soit pas le cas dans les exemples non limitatifs illustrés sur les figures 1 et 2, que les moyens de protection galvanique MP, ainsi qu'une partie des éventuels moyens de protection auxiliaires, pourraient faire partie des moyens de contrôle MC (par exemple sous la forme d'une interface d'entrée).

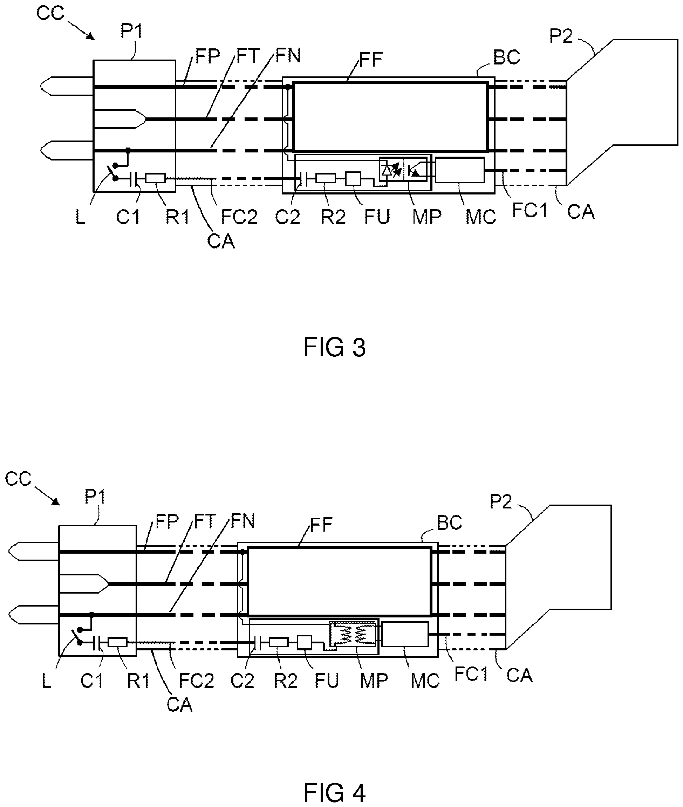

Les figures 3 et 4 présentent chacune une variante de réalisation respectivement des cordons des figures 1 et 2. Dans chacune de ces variantes, le boitier de contrôle BC comprend en outre des moyens de commutations de lignes FF. Les moyens de commutations de lignes permettent d'arrêter la circulation du courant en cas de défaillance ou si une fuite de courant est détectée.

L'invention offre plusieurs avantages, parmi lesquels :
- la possibilité d'utiliser deux sous-parties de câble électrique de même type, ce qui permet de réduire les coûts,
- une robustesse améliorée,
- un meilleur contrôle des défaillances électriques,
- quasiment aucune perturbation des moyens de protection différentielle du boîtier de contrôle,
- une protection (ou isolation) galvanique des moyens de commande vis-à-vis du circuit électrique de contrôle.

L'invention ne se limite pas aux modes de réalisation de cordon de charge décrits ci-avant, seulement à titre d'exemple, mais elle englobe toutes les variantes que pourra envisager l'homme de l'art dans le cadre des revendications ci-après.

## Revendications

1. Cordon de charge (CC), comprenant i) une première prise (P1) destinée à être connectée à une prise de courant et comportant des premiers moyens d'action (L) propres à placer un circuit électrique dans un premier état en cas de coopération avec des seconds moyens d'action de ladite prise de courant, ii) une seconde prise (P2) destinée à être connectée à une prise de véhicule, iii) un câble électrique (CA) comportant au moins un fil de neutre (FN) et un fil de phase (FP) interconnectant lesdites première (P1) et seconde (P2) prises, iv) un boîtier de contrôle (BC) comportant des moyens de contrôle (MC) couplés audit circuit électrique et agencés pour délivrer un signal à un premier fil de contrôle (FC1), connecté à ladite seconde prise (P2), lorsque ledit circuit électrique est dans son premier état, **caractérisé en ce que** ledit circuit électrique comprend un second fil de contrôle (FC2) couplé auxdits premiers moyens d'action (L), une première liaison connectant lesdits premiers moyens d'action (L) à l'un desdits fil de neutre (FN) et fil de phase (FP), une seconde liaison connectée à l'autre desdits fil de neutre (FN) et fil de phase (FP), et des moyens de protection galvanique (MP) connectés audit second fil de contrôle (FC2) et à ladite seconde liaison et agencés pour assurer une protection galvanique des moyens de contrôle (MC) vis-à-vis dudit fil de neutre (FN), dudit fil de phase (FP) et dudit second fil de contrôle (FC2), et pour avertir lesdits moyens de contrôle (MC) lorsque ledit circuit électrique est dans son premier état.

2. Cordon de charge selon la revendication 1, **caractérisé en ce que** lesdits moyens de protection galvanique (MP) comprennent un opto-coupleur propre, en cas de circulation d'un courant dans ledit circuit électrique, à générer un courant destiné à avertir lesdits moyens de contrôle (MC) du placement dudit circuit électrique dans son premier état.

3. Cordon de charge selon la revendication 1, **caractérisé en ce que** lesdits moyens de protection galvanique (MP) comprennent un transformateur comportant des parties primaire et secondaire, ladite partie secondaire étant propre à générer un courant destiné à avertir lesdits moyens de contrôle (MC) du placement dudit circuit électrique dans son premier état en cas de circulation dans ladite partie primaire d'un courant issu dudit circuit électrique.

4. Cordon de charge selon l'une des revendications 1 à 3, **caractérisé en ce que** ledit circuit électrique comprend en outre des moyens de protection auxiliaires (R1, C1, R2, C2, FU) implantés dans ladite première prise (P1) et/ou ledit boîtier de contrôle (BC) et agencés pour assurer une protection électrique audit boîtier de contrôle (BC) en cas de survenue d'un problème électrique dans ledit circuit électrique.

5. Cordon de charge selon la revendication 4, **caractérisé en ce que** lesdits moyens de protection auxiliaires (R1, C1, R2, C2, FU) comprennent au moins un composant électrique choisi dans un groupe comprenant au moins un composant résistif, un composant capacitif et un fusible.

6. Cordon de charge selon la revendication 5, **caractérisé en ce que** lesdits moyens de protection auxiliaires (R1, C1, R2, C2, FU) comprennent un composant résistif (R1) et un composant capacitif (C1) montés en série sur ledit second fil de contrôle (FC2) dans ladite première prise (P1), et un composant résistif (R2), un composant capacitif (C2) et un fusible (FU) montés en série sur ledit second fil de contrôle (FC2) dans ledit boîtier de contrôle (BC).

7. Cordon de charge selon l'une des revendications 1 à 6, **caractérisé en ce que** ladite première liaison interconnecte lesdits premiers moyens d'action (L) audit fil de neutre (FN) dans ladite première prise (P1), et ladite seconde liaison interconnecte ledit fil de phase (FP) auxdits moyens de protection galvanique (MP) dans ledit boîtier de contrôle (BC).

8. Cordon de charge selon l'une des revendications 1 à 6, **caractérisé en ce que** ladite première liaison interconnecte lesdits premiers moyens d'action (L) audit fil de phase (FP) dans ladite première prise (P1), et ladite seconde liaison interconnecte ledit fil de neutre (FN) auxdits moyens de protection galvanique (MP) dans ledit boîtier de contrôle (BC).

9. Cordon de charge selon l'une des revendications 1 à 8, **caractérisé en ce que** lesdits premiers moyens d'action (L) sont agencés sous la forme d'un interrupteur comportant une lame magnétique propre à être déplacée en présence de seconds moyens d'action de type magnétique.

10. Cordon de charge selon l'une des revendications 1 à 9, **caractérisé en ce que** lesdits moyens de protection galvanique (MP) font partie desdits moyens de contrôle (MC).

## Patentansprüche

1. Ladekabel (CC), das i) einen ersten Stecker (P1) umfasst, der dazu bestimmt ist, an einer Stromsteckdose angeschlossen zu werden, und der erste Aktionsmittel (L) umfasst, die geeignet sind, um einen Stromkreis in einen ersten Zustand im Fall von Zusammenarbeit mit zweiten Aktionsmitteln der Stromsteckdose zu platzieren, ii) einen zweiten Stecker (P2), die dazu bestimmt ist, mit einer Fahrzeugsteckdose verbunden zu werden, iii) ein Stromkabel (CA), das mindestens einen Nullleiter (FN) und einen Phasenleiter (FP) umfasst, die den ersten Stecker (P1) und den zweiten Stecker (P2) zusammenschalten, iv) ein Steuergehäuse (BC), das Steuermittel (MC) umfasst, die mit dem Stromkreis gekoppelt und eingerichtet sind, um ein Signal zu einem ersten Steuerleiter (FC1) zu liefern, der an den zweiten Stecker (P2) angeschlossen ist, wenn der Stromkreis in seinem ersten Zustand ist, **dadurch gekennzeichnet, dass** der Stromkreis einen zweiten Steuerleiter (FC2) umfasst, der mit den ersten Aktionsmitteln (L) gekoppelt ist, eine erste Verbindung, die die ersten Aktionsmittel (L) mit dem Nullleiter (FN) oder dem Phasenleiter (FP) verbindet, eine zweite Verbindung, die mit dem anderen des Nullleiters (FN) und des Phasenleiters (FP) verbunden ist, und galvanische Schutzmittel (MP), die mit dem zweiten Steuerleiter (FC2) und der zweiten Verbindung verbunden und eingerichtet sind, um einen galvanischen Schutz der Steuermittel (MC) gegenüber dem Nullleiter (FN), dem Phasenleiter (FP) und dem zweiten Steuerleiter (FC2) sicherzustellen und um die Steuermittel (MC) zu warnen, wenn der Stromkreis in seinem ersten Zustand ist.

2. Ladekabel nach Anspruch 1, **dadurch gekennzeichnet, dass** die galvanischen Schutzmittel (MP) einen Optokoppler umfassen, der im Fall von Zirkulation eines Stroms in dem Stromkreis geeignet ist, einen gewünschten Strom zu erzeugen, der dazu bestimmt ist, die Steuermittel (MC) zu warnen, dass der Stromkreis in seinen ersten Zustand platziert ist.

3. Ladekabel nach Anspruch 1, **dadurch gekennzeichnet, dass** die galvanischen Schutzmittel (MP) einen Transformator umfassen, der einen Primärteil und einen Sekundärteil umfasst, wobei der Primärteil geeignet ist, einen Strom zu erzeugen, der dazu bestimmt ist, die Steuermittel (MC) zu warnen, dass der Stromkreis im Fall von Zirkulation in dem Primärteil eines Stroms, der aus dem Stromkreis stammt, in seinen ersten Zustand versetzt ist.

4. Ladekabel nach einem der Ansprüche 1 bis 3, **dadurch gekennzeichnet, dass** der Stromkreis außerdem Hilfsschutzmittel (R1, C1, R2, C2, FU) umfasst, die in dem ersten Stecker (P1) und/oder dem Steuergehäuse (BC) angeordnet und eingerichtet sind, um einen elektrischen Schutz für das Steuergehäuse (BC) im Fall eines Auftretens eines elektrischen Problems in dem Stromkreis sicherzustellen.

5. Ladekabel nach Anspruch 4, **dadurch gekennzeichnet, dass** die Hilfsschutzmittel (R1, C1, R2, C2, FU) mindestens ein elektrisches Bauteil umfassen, das aus einer Gruppe ausgewählt ist, die mindestens ein resistives Bauteil, ein kapazitives Bauteil und eine Sicherung umfasst.

6. Ladekabel nach Anspruch 5, **dadurch gekennzeichnet, dass** die Hilfsschutzmittel (R1, C1, R2, C2, FU) ein resistives Bauteil (R1) und ein kapazitives Bauteil (C1) umfassen, die in Serie auf dem zweiten Steuerleiter (FC2) in dem ersten Stecker (P1) geschaltet sind, und ein resistives Bauteil (R2), ein kapazitives Bauteil (C2) und eine Sicherung (FU), die auf dem zweiten Steuerleiter (FC2) in dem Steuergehäuse (BC) in Serie geschaltet sind.

7. Ladekabel nach einem der Ansprüche 1 bis 6, **dadurch gekennzeichnet, dass** die erste Verbindung die ersten Aktionsmittel (L) mit dem Nullleiter (FN) in dem ersten Stecker (P1) zusammenschaltet, und dass die zweite Verbindung den Phasenleiter (FP) mit den galvanischen Schutzmitteln (MP) in dem Steuergehäuse (BC) zusammenschaltet.

8. Ladekabel nach einem der Ansprüche 1 bis 6, **dadurch gekennzeichnet, dass** die erste Verbindung die ersten Aktionsmittel (L) mit dem Phasenleiter (FP) in dem ersten Stecker (P1) zusammenschaltet, und dass die zweite Verbindung den Nullleiter (FN) mit den galvanischen Schutzmitteln (MP) in dem Steuergehäuse (BC) zusammenschaltet.

9. Ladekabel nach einem der Ansprüche 1 bis 8, **dadurch gekennzeichnet, dass** die ersten Aktionsmittel (L) in der Form eines Schalters eingerichtet sind, der eine Magnetklinge umfasst, die geeignet ist, um in Gegenwart zweiter Aktionsmittel des magnetischen Typs verlagert zu werden.

10. Ladekabel nach einem der Ansprüche 1 bis 9, **dadurch gekennzeichnet, dass** die galvanischen Schutzmittel (MP) zu den Steuermitteln (MC) gehören.

## Claims

1. A charging cable (CC), including i) a first plug (P1) intended to be connected to an electrical socket and comprising first operating means (L) suitable for placing an electrical circuit in a first state in the event of cooperation with second operating means of said electrical socket, ii) a second plug (P2) intended to be connected to a socket in a vehicle, iii) an electrical cable (CA) comprising at least a neutral wire (FN) and a live wire (FP) interconnecting said first (P1) and second (P2) plugs, iv) a control unit (BC) comprising control means (MC) coupled to said electrical circuit and arranged to send a signal to a first control wire (FC1), connected to said second plug (P2), when said electrical circuit is in its first state, **characterized in that** said electrical circuit includes a second control wire (FC2) coupled to said first operating means (L), a first connection connecting said first operating means (L) to one of said neutral wire (FN) and live wire (FP), a second connection connected to the other of said neutral wire (FN) and live wire (FP), and galvanic protection means (MP) connected to said second control wire (FC2) and to said second connection and arranged to provide a galvanic connection of the control means (MC) in relation to said neutral wire (FN), said live wire (FP) and said second control wire (FC2), and for warning said control means (MC) when said electrical circuit is in its first state.

2. The charging cable according to Claim 1, **characterized in that** said galvanic protection means (MP) include an optocoupler suitable, in the event of circulation of a current in said electrical circuit, for generating a current intended to warn said control means (MC) of the placement of said electrical circuit in its first state.

3. The charging cable according to Claim 1, **characterized in that** said galvanic protection means (MP) include a transformer comprising primary and secondary parts, said secondary part being suitable for generating a current intended to warn said control means (MC) of the placement of said electrical circuit in its first state in the event of circulation in said primary part of a current originating from said electrical circuit.

4. The charging cable according to one of Claims 1 to 3, **characterized in that** said electrical circuit further includes auxiliary protection means (R1, C1, R2, C2, FU) installed in said first plug (P1) and/or said control unit (BC) and arranged to provide electrical protection to said control unit (BC) in the event of the occurrence of an electrical problem in said electrical circuit.

5. The charging cable according to Claim 4, **characterized in that** said auxiliary protection means (R1, C1, R2, C2, FU) include at least one electrical component selected from a group including at least one resistive component, one capacitive component and a fuse.

6. The charging cable according to Claim 5, **characterized in that** said auxiliary protection means (R1, C1, R2, C2, FU) include a resistive component (R1) and a capacitive component (C1) mounted in series on said second control wire (FC2) in said first plug (P1), and a resistive component (R2), a capacitive component (C2) and a fuse (FU) mounted in series on said second control wire (FC2) in said control unit (BC).

7. The charging cable according to one of Claims 1 to 6, **characterized in that** said first connection interconnects said first operating means (L) to said neutral wire (FN) in said first plug (P1), and said second connection interconnects said live wire (FP) to said galvanic protection means (MP) in said control unit (BC).

8. The charging cable according to one of Claims 1 to 6, **characterized in that** said first connection interconnects said first operating means (L) to said live wire (FP) in said first plug (P1), and said second connection interconnects said neutral wire (FN) to said galvanic protection means (MP) in said control unit (BC).

9. The charging cable according to one of Claims 1 to 8, **characterized in that** said first operating means (L) are arranged in the form of a switch comprising a magnetic reed suitable to be displaced in the presence of second operating means of magnetic type.

10. The charging cable according to one of Claims 1 to 9, **characterized in that** said galvanic protection means (MP) form part of said control means (MC).
